# EUROPÄISCHE PATENTANMELDUNG

(11) **EP 1 181 966 A1**
(43) Veröffentlichungstag der Anmeldung: **27.02.2002**
(21) Anmeldenummer: 01120087.0
(22) Anmeldetag: 21.08.2001
(51) Int. Cl.: B01D 46/24, F01N 3/02

(54) **Verfahren und Vorrichtung zum Reinigen von Filtern**

(30) Priorität: 21.08.2000 DE 10040787
(71) Anmelder: GST SYSTEME, GESELLSCHAFT FÜR ABSCHEIDE- UND STEUERTECHNIK mbH, D-63517 Rodenbach (DE)
(72) Erfinder: Schöneborn, Axel, 63517 Rodenbach (DE)
(74) Vertreter: Obermüller, Bernhard

(57) **Zusammenfassung**

Die Erfindung betrifft ein Verfahren und eine Vorrichtung zum Reinigen von Filtermaterial in einem Filter (6) zur Abscheidung von Partikeln aus einem Gasstrom, insbesondere aus den Abgasen von Brennkraftmaschinen (1), wobei das Filtermaterial des Filters (6) in eingebautem Zustand während des Filterbetriebs intermittierend mit einer Reinigungsflüssigkeit beaufschlagt wird. Erfindungsgemäß wird die Reinigungsflüssigkeit im wesentlichen durch das Filter (6) hindurch und zumindest teilweise gemeinsam mit dem Gasstrom aus dem Filter (6) geleitet. Als Reinigungsflüssigkeit kann Wasser oder eine wässrige Lösung verwendet werden, gegebenenfalls unter Zumischung von die Reinigung unterstützenden Additiven. Als Reinigungsflüssigkeit kann vorteilhafterweise das Waschwasser oder die Waschlösung eines Kraftfahrzeugs eingesetzt werden. Die Reinigungsflüssigkeit kann im Filter (6) zumindest zeitweise im wesentlichen in dampfförmigem Zustand vorliegen. Bevorzugt wird der Gasstrom durch die Reinigungsflüssigkeit soweit abgekühlt, dass die Tautemperatur des Gasstromes zumindest zeitweise erreicht oder unterschritten wird.

## Beschreibung

Die Erfindung betrifft ein Verfahren zum Reinigen von Filtermaterial in einem Filter zur Abscheidung von Partikeln aus einem Gasstrom, wobei das Filtermaterial des Filters in eingebautem Zustand während des Filterbetriebs intermittierend mit einer Reinigungsflüssigkeit beaufschlagt wird.

Die Erfindung betrifft femer eine Vorrichtung zum Reinigen von Filtermaterial in Filtern umfassend zumindest ein Filtermaterial enthaltendes Filter zur Abscheidung von Partikeln aus einem Gasstrom, zumindest eine Zuleitung für den Gasstrom zum Filter, Mittel zur intermittierenden Zufuhr einer Reinigungsflüssigkeit auf das Filtermaterial des Filter und zumindest eine Ableitung für den Gasstrom vom Filter.

Verfahren zum Reinigen von Filtermaterial in einem Filter zur Abscheidung von Partikeln aus einem Gasstrom und entsprechende Vorrichtungen werden in der industriellen Anwendung vielfach eingesetzt, insbesondere zur Reduktion der Partikelemission in Abgasen, beispielsweise im Zusammenhang mit der Partikelabscheidung aus den Abgasen von Brennkraftmaschinen.

Aus der deutschen Patentanmeldung DE 26 06 829 A1 ist ein Verfahren zur Reinigung feststoffhaltiger Abgasströme - insbesondere zur Reinigung von mit anorganischen und organischen Stoffen beladenen Abgasen - mittels eines Filtersystems bekannt, bei welchem eine Filterschicht des Filters kontinuierlich oder diskontinuierlich mit flüssigen Medien besprüht wird, in denen die an der Filterschicht des Filters abgeschiedenen Feststoffe löslich oder emulgierbar sind. Zum Ablösen von Festpartikeln wird die in einem Filterbehälter vertikal angeordnete, vom zu reinigenden Abgasstrom horizontal durchströmte Filterschicht mit einer Flüssigkeit besprüht. Mittels der aufgesprühten Flüssigkeit werden die an der Filterschicht des Filters abgeschiedenen, in der Flüssigkeit löslichen oder emulgierbaren Feststoffe abgespült, wobei die Flüssigkeit nach unten im wesentlichen über die vom zu reinigenden Abgasstrom angeströmte Oberfläche der Filterschicht abläuft und sich über dem Boden der Filterbehälters sammelt. In der DE 26 06 829 A1 ist die Möglichkeit erwähnt, mit der beschriebenen Reinigung ein Abreinigungseffekt ohne Stillstandszeiten während der Betriebszeit des Filters erzielen zu können. Die Flüssigkeit weist auf der Filterschicht trotz eines im wesentlichen parallel zur Strömungsrichtung des zu reinigenden Abgases erfolgten Eindüsens aufgrund der Gravitation eine Strömungsrichtung im wesentlichen senkrecht zur Strömungsrichtung des Abgases auf. Ein Durchströmen der Flüssigkeit durch das beladene Filter hindurch findet lediglich im Bodenbereich des Filterbehälters in Höhe der aufgestauten Flüssigkeit statt. Die im Bodenbereich des Filterbehälters aufgestaute Flüssigkeit wird in einen Voratsbehälter abgeführt, aus welchem wiederum im Kreislauf die Flüssigkeit zum Besprühen des Filters entnommen wird. Die Flüssigkeit wird nicht über die Ableitung für den Abgasstrom aus dem Filterbehälter, sondem vollständig über separate Leitungen aus dem Filterbehälter abgezogen. Ein Phasenwechsel der Flüssigkeit in die Gas- oder Dampfphase ist in der DE 26 06 829 A1 nicht - auch nicht lediglich teilweise - vorgesehen.

Zur Partikelabscheidung aus den Abgasen von Brennkraftmaschinen sind zahlreiche Filtervarianten entwickelt worden. So ist beispielsweise aus der eigenen deutschen Patentanmeldung DE 42 23 277 A1 bzw. aus dem korrespondierenden europäischen Patent EP 0 650 551 B1 der Einsatz sintermetallischer Feinfilter bekannt, mit deren Hilfe insbesondere Rußpartikeln aus den Abgasen abgeschieden werden und von Zeit zu Zeit das Filter einer Heißregeneration unterzogen wird. Zur Regeneration wird durch das beladene Filter zeitweise ein elektrischer Strom geleitet und dadurch das Filter über die Zündtemperatur der Partikeln erwärmt. Dabei kann die Filterfläche insbesondere aus einem Filtervlies bestehen. Es ist ein solches sintermetallisches Filtermaterial beispielsweise vom Typ MCrAIX bekannt, wobei M für eine Grundform aus Eisen, Nickel und/oder Kobalt und X für ein Verstärkungselement aus Zirkon, Hafnium, Yttrium, Zer, Lanthan und/oder aus einem Mischmetall, insbesondere aus einem seltene Erdmetalle umfassenden Mischmetall, steht.

Trotz der Heißregeneration mit Verbrennung der im Filtermaterial abgeschiedenen Partikeln wie beispielsweise der Rußpartikel belädt sich das Filtermaterial mit anhaltender Filtrationszeit weiter, da sich nicht brennbare oder zumindest unter den Bedingungen der Heißregeneration nicht brennbare Verbindungen wie Oxide (Asche) und/oder Salze im Filtermaterial anlagem und ansammeln und so unabhängig von bzw. zusätzlich zu der Filterbeladung mit brennbaren Partikeln zur Erhöhung des Druckverlustes über den Filter führen.

Aus der deutschen Patentanmeldung DE 43 13 132 A1 ist ein Verfahren zur Reinigung von Partikelfiltem in Auspuffsystemen von Brennkraftmaschine bekannt, wobei das Partikelfilter Filtermaterial in einem von Abgas durchströmten Gehäuse enthält, welches bei Unterbrechung des Filterbetriebs mit einer Flüssigkeit entgegen der Durchströmungsrichtung des Abgases gespült wird. Das Partikelfilter umfasst außer dem Gehäuse jeweils eine wasserdicht verschließbare Abgaszufuhrleitung, Abgasauslassleitung, jeweils einen verschließbaren Flüssigkeitszulauf und Flüssigkeitsablauf, sowie ein Entlüftungsventil.

Der Erfindung liegt die Aufgabe zugrunde, ein Verfahren und eine Vorrichtung der eingangs bezeichneten Art aufzuzeigen, welche ein Reinigen des Filtermaterials in Filtern zur Abscheidung von Partikeln aus einem Gasstrom in vorteilhafter Art und Weise ermöglichen. Dabei sollte eine einfache, aber effektive Methode der Reinigung insbesondere auch als Ergänzung zu einer Regeneration mit Verbrennung von abgeschiedenen Partikeln durch Erwärmung des Filtermaterials auf Zündtemperatur oder bevorzugt über die Zündtemperatur der Partikeln hinaus zur Verfügung gestellt werden.

Diese Aufgabe wird für das Verfahren dadurch gelöst, dass die Reinigungsflüssigkeit im wesentlichen durch das Filter hindurch und zumindest teilweise gemeinsam mit dem Gasstrom aus dem Filter (6) geleitet wird.

Diese Aufgabe wird für die Vorrichtung dadurch gelöst, dass Mittel zur intermittierenden Zufuhr einer Reinigungsflüssigkeit durch das Filtermaterial des Filters hindurch und Mittel zum zumindest teilweise gemeinsamen Ableiten der Reinigungsflüssigkeit mit dem gereinigten Gasstrom aus dem Filter vorgesehen sind.

Erfindungsgemäß wird das Filter in eingebautem Zustand gereinigt . Dies bedeutet eine wesentliche Erleichterung der Reinigung, weil auf einen aufwendigen und zeitraubenden Ausbau des Filters verzichtet werden kann. Vorteilhafterweise kann das Filter während des Filterbetriebs gereinigt werden. Dies ist möglich, da der Gasstrom trotz der Einleitung der Reinigungsflüssigkeit durch den Filter hindurch strömen kann und auch in dieser Phase unverändert eine Partikelabscheidung sichergestellt bleibt. Erfindungsgemäß wird die Reinigungsflüssigkeit zumindest teilweise gemeinsam mit dem gereinigten Gasstrom aus dem Filter geleitet.

In Ausgestaltung der Erfindung wird die Reinigungsflüssigkeit mit einer geringeren Temperatur als der zu filternde Gasstrom zugeführt.

Mit besonderem Vorteil liegt die Reinigungsflüssigkeit im Filter zumindest teilweise und/oder zeitweise in der Gas- und/oder Dampfphase vor. Aufgrund der in der Regel beträchtlichen Temperaturdifferenz (beispielsweise zwischen 100 und 600 K) zwischen dem Gasstrom und der in den Gasstrom zugegebenen Reinigungsflüssigkeit kommt es zu einem zumindest teilweise Verdampfen der Reinigungsflüssigkeit.

Bevorzugt liegt die Reinigungsflüssigkeit im Filter zumindest zeitweise zum überwiegenden Teil in der Dampfphase vor. Der Anteil der in dampfförmigem Zustand vorliegenden Reinigungsflüssigkeit im Filter liegt dabei über 50 %, vorzugsweise über 60 %, besonders bevorzugt über 75 % der Reinigungsflüssigkeit im Filter.
In Weiterbildung der Erfindung wird die Reinigungsflüssigkeit zum überwiegenden Teil in der Gasphase aus dem Filter geleitet. Der Anteil der in gasförmigem Zustand durch den Auslass abgezogenen Reinigungsflüssigkeit beträgt dabei über 50 %, vorzugsweise über 75 %, besonders bevorzugt über 90 % der Reinigungsflüssigkeit.
Die Reinigungsflüssigkeit kann insbesondere in den Gasstrom verteilt eingeleitet werden. Auf diese Weise kann wirksam die Dampfbildung unterstützt werden. Die Zufuhr der Reinigungsflüssigkeit in den Gasstrom erfolgt bevorzugt vor dem, aber auch möglicherweise im Filter. Die Reinigungsflüssigkeit wird im erstgenannten Fall in den Gasstrom in der Zuleitung des Gasstromes zum Filter eingespeist, d.h. vor der Einleitung des Gasstromes in das Filtergehäuse, so dass Gasstrom und Reinigungsflüssigkeit gemeinsam in das Filtergehäuse eingeleitet werden. Bei der erfindungsgemäßen Vorrichtung sind für diese Ausgestaltung Mittel zur Zufuhr der Reinigungsflüssigkeit so angeordnet, dass die Reinigungsflüssigkeit in den Gasstrom eingeleitet wird. Die Zufuhr der Reinigungsflüssigkeit ist aber auch innerhalb des Filtergehäuses in Durchströmungsrichtung vor dem Filtermaterial möglich. Dies ist insbesondere bei der unten erläuterten Möglichkeit des Einsatzes mehrerer Filterelemente im Filter vorteilhaft, beispielsweise um die einzelenen Filterelemente gezielt und/oder separat mit Reinigungsflüssigkeit beaufschlagen zu können.

In Weiterbildung der Erfindung wird die Reinigungsflüssigkeit über mindestens einen Injektor oder eine Düse eingespritzt. Bei der zuletzt beschriebenen Ausgestaltung erfolgt dies durch Eindüsen in den Gasstrom.

Vorteilhafterweise wird die Reinigungsflüssigkeit mit einer geringeren Temperatur als der zu filternde Gasstrom zugeführt. Dabei kann der Gasstrom durch die Reinigungsflüssigkeit - insbesondere auch aufgrund der Verdampfungsenthalpie der Reinigungsflüssigkeit - soweit abgekühlt werden, dass die Tautemperatur des Gasstromes zumindest zeitweise erreicht oder bevorzugt unterschritten wird. Der beim Erreichen und/oder nach Unterschreiten des Taupunktes entstehende Dampf wird von dem ebenfalls bis auf die oder unterhalb der Tautemperatur abgekühlten Filter abgeschieden, was das Lösen und/oder Ausschwemmen der Salze und/oder Oxide (Asche) bewirkt.

In Weiterbildung der Erfindung wird der Zeitpunkt der Einleitung der Reinigungsflüssigkeit, die Dauer der Einleitung der Reinigungsflüssigkeit und/oder die Menge der zugeführten Reinigungsflüssigkeit geregelt oder gesteuert. In der Vorrichtung können dazu Mittel zur Steuerung oder Regelung des Zeitpunktes der Einleitung der Reinigungsflüssigkeit, der Dauer der Einleitung der Reinigungsflüssigkeit und/oder der Menge der zugeführten Reinigungsflüssigkeit vorgesehen sein. Damit ist eine wesentlich genauere Anpassung an die vorherrschenden Bedingungen insbesondere der Partikelabscheidung möglich.

Mittels einer Düse bzw. mehrerer Düsen kann eine gute Verteilung der Reinigungsflüssigkeit sichergestellt werden. Das Filter kann ein Filterelement oder mehrere Filterelemente (beispielsweise Filterpatronen) umfassen, welche
- über eine Düse gleichzeitig oder nacheinander
   oder
- über mehrere Düsen gleichzeitig, mit zeitlicher Überlappung oder nacheinander
gereinigt werden.

Zur Erhöhung ihrer Reinigungswirkung kann die Reinigungsflüssigkeit über mehrere Druckstöße zugeführt werden.

Bei Einleitung der Reinigungsflüssigkeit können in der Zuleitung oder in den Zuleitungen für die Reinigungsflüssigkeit Einbauten vorhanden sein, um ein Hineindrücken des zu reinigenden Gasstromes in diese Zuleitungen zu verhindern, beispielsweise in Form von Rückschlagventilen.

Im Rahmen der Erfindung kann grundsätzlich jede geeignete Reinigungsflüssigkeit verwendet werden. Als Reinigungsflüssigkeit sollte möglichst eine nicht brennbare, nicht toxische und/oder nicht explosive Flüssigkeit eingesetzt werden.

Es hat sich bestens bewährt, wenn als Reinigungsflüssigkeit Wasser oder eine wässrige Lösung verwendet wird. Das Filter wird dann für die Reinigung mit Wasser oder der wässrigen Lösung gequencht.

Die Reinigungsflüssigkeit wird in der Regel aus einem Speicherbehälter für die Reinigung entnommen. Dies kann ein separater Speicherbehälter für die Reinigungsflüssigkeit sein, oder es wird bevorzugt ein bereits vorhandener Speicherbehälter auch für die Speicherung der Reinigungsflüssigkeit benutzt (zumindest teilweise).

In Weiterbildung des erfindungsgemäßen Verfahrens können zur Erhöhung der Wirksamkeit der Reinigungsflüssigkeit die Reinigung unterstützende Additive wie beispielsweise Tenside, Detergenzien und/oder Lösungsmittel zugemischt werden.

Besondere Vorteile bietet die Erfindung mit der Reinigung des Abgasfilters eines Fahrzeugs mit Brennkraftmaschine, insbesondere wenn das Abgasfilter eines Fahrzeugs mit Dieselbrennkraftmaschine gereinigt wird. Bei Anwendung der Erfindung können aber auch Abgasfilter eines Fahrzeugs mit Ottobrennkraftmaschine gereinigt werden.

Eine die Nachrüstbarkeit der Erfindung in bestehende Abgasreinigungssysteme fördemde und platzsparende Variante der Erfindung besteht darin, dass als Reinigungsflüssigkeit die Waschflüssigkeit oder die Waschlösung eines Kraftfahrzeugs verwendet wird. Diese haben sich überraschenderweise als geeignet herausgestellt. Für den Fall, dass für die Reinigung von Partikelfiltem im Abgaskanal von Fahrzeugen mit Brennkraftmaschinen als Reinigungsflüssigkeit Wasser oder eine wässrige Lösung verwendet wird, kann das im Fahrzeug bereits gespeicherte Wasser aus dem vorhandenen Speicherbehälter als Reinigungsflüssigkeit genutzt werden. Dies erleichtert auch die Nachrüstung der Erfindung in bestehende Abgasreinigungssysteme.

Die Erfindung entfaltet ihre Vorteile insbesondere dann, wenn die Reinigung in Ergänzung zu einer Regeneration, insbesondere in Ergänzung zu einer Heißregeneration des Filtermaterials des Filters erfolgt.

Die Erfindung kann gerade in Verbindung mit einem sintermetallischen Filtervlies - wie es beispielsweise oben näher erläutert ist - als Filtermaterial, aber auch bei allen geeigneten Thermo-Schock-festen Filtermaterialien Anwendung finden, so dass sich im Ergebnis eine wirksame Partikelabscheidung in Kombination mit einer effektiven Filterreinigung ergibt.

Die Reinigung kann unmittelbar nach der Regeneration des Filtermaterials des Filters erfolgen. Dies hat den Vorteil, dass das Filter die geringste Partikelbeladung im Zeitraum bzw. Zyklus zwischen einer Regeneration und der nächsten aufweist. Es kann insbesondere eine Reinigung von Aschen unmittelbar nach der Regeneration des Filtermaterials des Filters von Ruß und/oder organischen Schadstoffen durchgeführt werden. In der Vorrichtung können Mittel zur Steuerung oder Regelung vorgesehen sein, die bewirken, dass die Reinigung unmittelbar nach der Regeneration des Filtermaterials des Filters erfolgt.

Die Erfindung sowie weitere Einzelheiten der Erfindung werden im folgenden anhand eines in der Zeichnung schematisch dargestellten Ausführungsbeispieles näher erläutert.

### Hierbei zeigt:

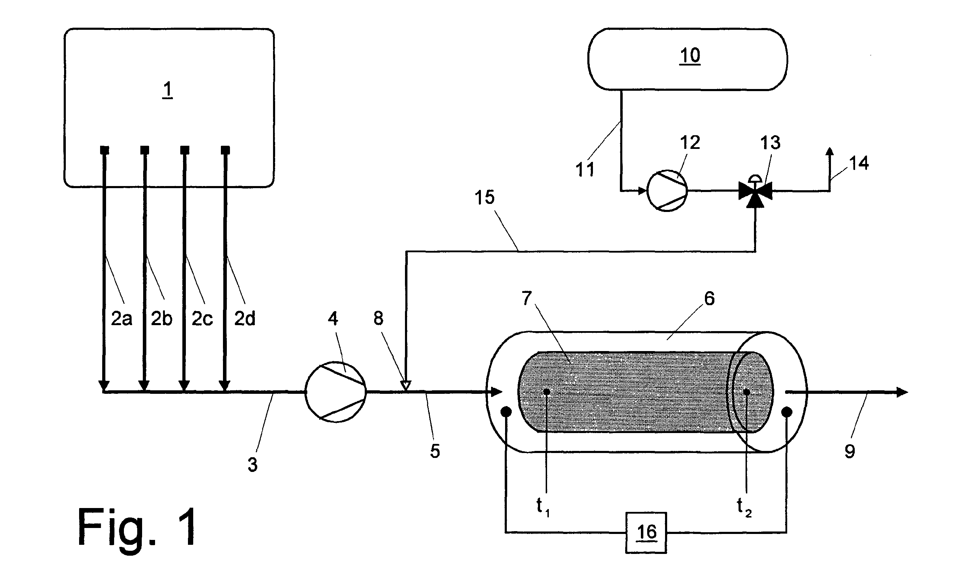

- Figur 1: ein Blockschema der erfindungsgemäßen Reinigung eines Abgasfilters eines Fahrzeugs mit Verbrennungskraftmaschine.

In der einzigen Figur 1 ist ein Motorblock 1 einer Verbrennungskraftmaschine eines Fahrzeugs (beispielsweise ein Personen- oder Lastkraftfahrzeug) gezeigt, der im Ausführungsbeispiel vier Zylinder umfasst. Entsprechend sind vier Auslasskanäle für das Abgas aus den einzelnen Zylindem und zugehörige Abgasleitungen 2a bis 2d vorhanden, die in der gemeinsamen Abgasleitung 3 (Hosenstück) gesammelt werden.

Über den gegebenenfalls vorhandenen Turbolader 4 wird das Abgas via Abgasleitung 5 in das Filter 6 (beispielsweise sintermetallisches Partikelabscheidefilter) geführt. Im Filter 6 können ein Filterelement 7 (wie dargestellt) oder mehrere Filterelemente die gewünschte Partikelabscheidung bewerkstelligen. Es sind ferner Mittel (nicht dargestellt) zur Regeneration des Filtermaterials des Filterelements bzw. der Filterelemente vorgesehen. Vom Filtergehäuse des Filters 6 führt entweder die Abgasleitung 9 als Auslass aus dem Filter beispielsweise in einen Schalldämpfer der Abgasanlage des Fahrzeugs, oder das Filtergehäuse ist selbst das Endstück der Abgasanlage (in Figur 1 nicht dargestellt).

In Figur 1 ist femer ein Speicherbehälter 10 für das Waschwasser oder die Waschlösung des Kraftfahrzeugs gezeigt. Waschwasser oder Waschlösung werden aus dem Speicherbehälter 10 über Leitung 11 kraft einer Pumpe 12 (beispielsweise einer Zahnradpumpe) und über eine Leitung 14 einer nicht dargestellten Verwendung - beispielsweise zur Wäsche der Fahrzeugscheiben - zugeführt. In der Leitung nach der Pumpe 12 ist ein Ventil 13 angeordnet, über das die Abgabe des Wassers bzw. der Lösung geregelt wird. Das Ventil 13 ist als Dreiwege-Ventil (beispielsweise ein Magnetventil) ausgestaltet.

Das Dreiwege-Ventil 13 dient auch dazu, dass das Waschwasser oder die Waschlösung aus dem Speicherbehälter 10 zusätzlich zu seiner beschriebenen Funktion auch als Reinigungsflüssigkeit zur erfindungsgemäßen Reinigung benutzt werden kann. Vom Dreiwege-Ventil 13 führt Leitung 15 zum Filter 6. In Leitung 15 kann vorzugsweise ein Rückschlagventil eingebaut sein (nicht dargestellt).

In den Abgasstrom wird das Waschwasser oder die Waschlösung über eine Düse oder über mehrere Düsen - beispielsweise über einen Düsenstock mit mehreren Düseneindüst, wobei ein Düsenstock mit mehreren Düsen insbesondere dann sinnvoll ist, wenn mehrere Filterelemente im Filter 6 vorhanden sind. Anstelle der Düse oder Düsen können ein Injektor oder mehrere Injektoren eingesetzt werden. Im Ausführungsbeispiel nach Figur 1 wird Waschwasser oder die Waschlösung über eine Düse 8 eingedüst Möglich ist aber auch eine Einspeisung des Waschwassers oder der Waschlösung in die Abgasleitung 3 (Hosenstück) oder in die Abgasleitungen 2 a bis 2d aus den einzelnen Zylindern.

Das Fahrzeug kann wegen der erfindungsgemäßen Nutzung des Waschwassers oder der Waschlösung als Reinigungsflüssigkeit mit einem vergrößerten Speicherbehälter 10 ausgerüstet werden.

Im dargestellten Ausführungsbeispiel sind Mittel 16 zur Messung des Druckabfalls Δp im Filter 6 über das Filterelement vorhanden, wobei der Druckabfall innerhalb des Filtergehäuses zwischen Einlass und Auslass des Gasstromes erfasst wird. Diese Mittel 16 zur Messung des Druckabfalls Δp sind Teil der nicht im Einzelnen dargestellten Mittel zur Steuerung oder Regelung des Zeitpunktes der Einleitung der Reinigungsflüssigkeit, der Dauer der Einleitung der Reinigungsflüssigkeit und/oder der Menge der zugeführten Reinigungsflüssigkeit.

Beispielsweise kann bei einer maximalen Änderung des Druckabfalls Δp im Filter 6, die üblicherweise durch die Regeneration hervorgerufen wird, bei laufender Partikelabscheidung kurz nach der Regeneration das Dreiwege-Ventil 13 und die Pumpe 12 angesteuert werden, um ein Einspritzen der Reinigungsflüssigkeit über die Düse 8 in den Gasstrom innerhalb des Filters 6 zu bewirken. Bevorzugt wird die Menge der Reinigungsflüssigkeit und die Dauer des Einspritzens der Reinigungsflüssigkeit so gewählt und über eine auf Messungen mittels beispielsweise zweier Messpunkte (beispielsweise ein einlassseitig angeordneter Messpunkt t₁ und ein auslassseitig angeordneter Messpunkt t₂) auf und/oder innerhalb des Filtermaterials basierende Steuerung gesteuert. Damit kann sichergestellt werden, dass die Tautemperatur des Gasgemisches erreicht und kurzzeitig unterschritten wird, ohne dass allerdings die zulässige Thermo-Schock-Belastung des Filtermaterials überschritten wird. Diese Betriebsweise kann als Quenchreinigung des Filtermaterials bezeichnet werden.

Bei der Reinigung werden beispielsweise Verunreinigungen am und/oder im Filtermaterial in der Nähe des Siedepunktes des Reinigungsmittels angelöst oder gelöst und/oder vom heißen Gasstrom unterstützt ab- bzw. ausgeschwemmt.

Es hat sich gezeigt, dass die Dauer der Einleitung der Reinigungsflüssigkeit auf Werte unter 20 sec. bei einer Menge des Reinigungsmittels wesentlich unter 1 kg pro Filter bzw. Filterelement, auch mit mehreren Druckstößen, eingestellt werden kann.

Überschüssige Reinigungsflüssigkeit, die vom Gasstrom durch das Filtermaterial gedrückt und gegebenenfalls auf der Abströmseite des Filtermaterials mit den Verunreinigungen in den Filterbehälter abtropft, wird im weiteren Betrieb des Filters 6 verdunstet. Dieser Vorgang ist vergleichbar mit dem Verdunsten von Kondenswasser, was sich in der Regel bei jedem Kaltstart bildet, innerhalb des Abgassystems.

Die bei der erfindungsgemäßen Reinigung ausgewaschenen Salze und/oder Oxide (Asche) können bei Bedarf auch abgeleitet und gesammelt werden, sie können aber auch als "Kruste" an den Wänden des Filtergehäuses kleben.

### Liste der Bezugszeichen

- 1: Motorblock
- 2a: Abgasleitung aus einem Zylinder
- 2b: Abgasleitung aus einem Zylinder
- 2c: Abgasleitung aus einem Zylinder
- 2d: Abgasleitung aus einem Zylinder
- 3: Abgassammelleitung
- 4: Turbolader
- 5: Abgasleitung (Zuleitung zum Filter)
- 6: Filter zur Partikelabscheidung
- 7: Filterelement
- 8: Düse
- 9: Abgasleitung (Ausgang vom Filter)
- 10: Speicherbehälter
- 11: Leitung
- 12: Pumpe
- 13: Dreiwege-Ventil
- 14: Leitung für Waschflüssigkeit
- 15: Leitung für Reinigungsflüssigkeit
- 16: Mittel zur Messung des Druckabfalls Δp im Filter
- t₁: einlassseitiger Messpunkt im Filtermaterial
- t₂: auslassseitiger Messpunkt im Filtermaterial

## Patentansprüche

1. Verfahren zum Reinigen von Filtermaterial in einem Filter (6) zur Abscheidung von Partikeln aus einem Gasstrom, wobei das Filtermaterial des Filters (6) in eingebautem Zustand während des Filterbetriebs intermittierend mit einer Reinigungsflüssigkeit beaufschlagt wird, **dadurch gekennzeichnet, dass** die Reinigungsflüssigkeit im wesentlichen durch das Filter (6) hindurch und zumindest teilweise gemeinsam mit dem Gasstrom aus dem Filter (6) geleitet wird.

2. Verfahren nach Anspruch 1, **dadurch gekennzeichnet, dass** die Reinigungsflüssigkeit mit einer geringeren Temperatur als der zu filtemde Gasstrom zugeführt wird.

3. Verfahren nach Anspruch 1 oder 2, **dadurch gekennzeichnet, dass** die Reinigungsflüssigkeit im Filter (6) zumindest teilweise und/oder zeitweise in der Gas- und/oder Dampfphase vorliegt.

4. Verfahren nach einem der Ansprüche 1 bis 3, **dadurch gekennzeichnet, dass** die Reinigungsflüssigkeit im Filter (6) zumindest zeitweise zum überwiegenden Teil in der Dampfphase vorliegt.

5. Verfahren nach einem der Ansprüche 1 bis 4, **dadurch gekennzeichnet, dass** die Reinigungsflüssigkeit zum überwiegenden Teil in der Gasphase aus dem Filter (6) geleitet wird.

6. Verfahren nach einem der Ansprüche 1 bis 5, **dadurch gekennzeichnet, dass** die Reinigungsflüssigkeit in den Gasstrom verteilt eingeleitet wird.

7. Verfahren nach einem der Ansprüche 2 bis 6, **dadurch gekennzeichnet, dass** der Gasstrom durch die Reinigungsflüssigkeit soweit abgekühlt wird, dass die Tautemperatur des Gasstromes zumindest zeitweise erreicht oder unterschritten wird.

8. Verfahren nach einem der Ansprüche 1 bis 7, **dadurch gekennzeichnet, dass** der Zeitpunkt der Einleitung der Reinigungsflüssigkeit, die Dauer der Einleitung der Reinigungsflüssigkeit und/oder die Menge der zugeführten Reinigungsflüssigkeit geregelt oder gesteuert wird.

9. Verfahren nach einem der Ansprüche 1 bis 8, **dadurch gekennzeichnet, dass** das Filter (6) mehrere Filterelemente umfasst, welche über eine Düse (8) oder über einen Injektor gleichzeitig oder nacheinander oder über mehrere Düsen oder Injektoren gleichzeitig, mit zeitlicher Überlappung oder nacheinander gereinigt werden.

10. Verfahren nach einem der Ansprüche 1 bis 9, **dadurch gekennzeichnet, dass** die Reinigungsflüssigkeit über mehrere Druckstöße zugeführt wird.

11. Verfahren nach einem der Ansprüche 1 bis 10, **dadurch gekennzeichnet, dass** als Reinigungsflüssigkeit eine nicht brennbare, nicht toxische und/oder nicht explosive Flüssigkeit eingesetzt wird.

12. Verfahren nach einem der Ansprüche 1 bis 11, **dadurch gekennzeichnet, dass** als Reinigungsflüssigkeit Wasser oder eine wässrige Lösung verwendet wird.

13. Verfahren nach einem der Ansprüche 11 oder 12, **dadurch gekennzeichnet, dass** der Reinigungsflüssigkeit die Reinigung unterstützende Additive wie beispielsweise Tenside, Detergenzien und/oder Lösungsmittel zugemischt werden.

14. Verfahren nach einem der Ansprüche 1 bis 13, **dadurch gekennzeichnet, dass** das Abgasfilter (6) eines Fahrzeugs mit Brennkraftmaschine (1), insbesondere das Abgasfilter eines Fahrzeugs mit Dieselbrennkraftmaschine (1), gereinigt wird.

15. Verfahren nach Anspruch 14, **dadurch gekennzeichnet, dass** als Reinigungsflüssigkeit die Waschflüssigkeit oder die Waschlösung eines Kraftfahrzeugs verwendet wird.

16. Verfahren nach einem der Ansprüche 1 bis 15, **dadurch gekennzeichnet, dass** die Reinigung zusätzlich zu einer Regeneration, insbesondere zusätzlich zu einer Heißregeneration des Filtermaterials des Filters (6) erfolgt.

17. Verfahren nach Anspruch 16, **dadurch gekennzeichnet, dass** die Reinigung unmittelbar nach der Regeneration des Filtermaterials des Filters erfolgt.

18. Vorrichtung zum Reinigen von Filtermaterial in Filtern umfassend zumindest ein Filtermaterial enthaltendes Filter (6) zur Abscheidung von Partikeln aus einem Gasstrom, zumindest eine Zuleitung (5) für den Gasstrom zum Filter (6), Mittel (8, 15, 13) zur intermittierenden Zufuhr einer Reinigungsflüssigkeit auf das Filtermaterial des Filters (6) und zumindest eine Ableitung (9) für den Gasstrom vom Filter (6), **dadurch gekennzeichnet, dass** Mittel (8, 15, 13) zur intermittierenden Zufuhr einer Reinigungsflüssigkeit durch das Filtermaterial des Filters (6) hindurch und Mittel (9) zum zumindest teilweise gemeinsamen Ableiten der Reinigungsflüssigkeit mit dem gereinigten Gasstrom aus dem Filter (6) vorgesehen sind.

19. Vorrichtung nach Anspruch 18, **dadurch gekennzeichnet, dass** die Mittel (8) zur Zufuhr der Reinigungsflüssigkeit so angeordnet sind, dass die Reinigungsflüssigkeit in die Zuleitung (5; 3; 2a - 2d) des Gasstromes zum Filter (6) oder in den Gasstrom innerhalb des Filtergehäuses in Durchströmungsrichtung vor dem Filtermaterial (7) eingeleitet wird.

20. Vorrichtung nach Anspruch 18 oder 19, **dadurch gekennzeichnet, dass** mindestens eine Düse (8) oder einen Injektor zum Einspritzen der Reinigungsflüssigkeit vorhanden ist.

21. Vorrichtung nach einem der Ansprüche 18 bis 20, **dadurch gekennzeichnet, dass** Mittel (16, t₁, t₂) zur Steuerung oder Regelung des Zeitpunktes der Einleitung der Reinigungsflüssigkeit, der Dauer der Einleitung der Reinigungsflüssigkeit und/oder der Menge der zugeführten Reinigungsflüssigkeit vorgesehen sind.

22. Vorrichtung nach einem der Ansprüche 20 oder 21, **dadurch gekennzeichnet, dass** das Filter (6) mehrere Filterelemente mit einer Düse oder einem Injektor oder mit mehreren Düsen oder Injektoren für deren Reinigung umfasst.

23. Vorrichtung nach einem der Ansprüche 18 bis 22, **dadurch gekennzeichnet, dass** ein Speicherbehälter (10) für die Reinigungsflüssigkeit vorhanden ist.

24. Vorrichtung nach einem der Ansprüche 18 bis 23, **dadurch gekennzeichnet, dass** das Filter (6) ein Partikelfilter eines Fahrzeugs mit Brennkraftmaschine (1), insbesondere das Partikelfilter eines Fahrzeugs mit Dieselbrennkraftmaschine (1) ist.

25. Vorrichtung nach einem der Ansprüche 23 oder 24, **dadurch gekennzeichnet, dass** der Speicherbehälter für die Reinigungsflüssigkeit der Speicherbehälter für das Waschwasser oder die Waschlösung eines Kraftfahrzeugs ist.

26. Vorrichtung nach einem der Ansprüche 18 bis 25, **dadurch gekennzeichnet, dass** Mittel für eine Regeneration, insbesondere für eine Heißregeneration des Filtermaterials des Filters vorgesehen sind.

27. Vorrichtung nach Anspruch 26, **dadurch gekennzeichnet, dass** Mittel (8, 15, 13) zur Steuerung oder Regelung vorgesehen sind, die bewirken, dass die Reinigung unmittelbar nach der Regeneration des Filtermaterials des Filters erfolgt.

28. Fahrzeug, insbesondere Kraftfahrzeug, mit einer Vorrichtung nach einem der vorangehenden Ansprüche.
